# EUROPÄISCHE PATENTSCHRIFT

(11) **EP 3 540 262 B1**
(45) Veröffentlichungstag und Bekanntmachung des Hinweises auf die Patenterteilung: **10.03.2021**
(21) Anmeldenummer: 19151097.3
(22) Anmeldetag: 10.01.2019
(51) Int. Cl.: F16H 7/02

(54) **UMLAUFRÄDER-RIEMENGETRIEBE**
WHEEL BELT DRIVE
TRANSMISSION PAR COURROIE À ROUE PLANÉTAIRE

(30) Priorität: 15.03.2018 DE 102018203962
(43) Veröffentlichungstag der Anmeldung: 18.09.2019
(73) Patentinhaber: ContiTech Antriebssysteme GmbH, 30165 Hannover (DE)
(72) Erfinder: Fiss, Tim, 30519 Hannover (DE); Freiheit, Philipp, 30627 Hannover (DE)
(74) Vertreter: Continental Corporation

(56) Entgegenhaltungen:
- DE-A1- 3 719 006
- DE-A1-102015 208 131
- DE-C- 801 801

## Beschreibung

Die Erfindung betrifft ein Umlaufrädergetriebe gemäss dem Oberbegriff des Anspruchs 1.

Umlaufrädergetriebe unter Verwendung einer Kraft- und Momentenübertragung durch Riementriebe sind bekannt. So offenbart die die DE 8513152 U1 ein als Riemengetriebe ausgebildetes Umlaufrädergetriebe, bei dem der Riemen um das Sonnenrad herum und so zwischen Planetenrädern und einem Hohlrad hindurchgeführt wird, dass alle Räder miteinander drehend verbunden sind. Vorzugsweise wird hier ein beidseitig gezahnter Riemen verwendet, der das außenverzahnte Sonnenrad und die außenverzahnten Planetenräder umschlingt und mit der rückseitigen Verzahnung in das mit einer Innenverzahnung ausgebildete Hohlrad eingreift. Die Planetenräder sind dabei auf einem Steg drehbar so gelagert, dass der im Zwischenraum zwischen Planetenrädern Hohlrad durchlaufende beidseitig verzahnte Riemen sowohl in die Außenverzahnung des Planetenrades als auch in die Innenverzahnung des Hohlrades eingreift. Die Verzahnungen des Sonnenrades und der Planetenräder greifen also mit ihrer Verzahnung nicht direkt ineinander sondern sind über den Antriebsriemen miteinander verbunden. Gleiches gilt für die Paarung von Planetenrädern und Hohlrad. Bei einem solchen Planeten-Riemengetriebes kann der gleichzeitige Eingriff des Riemens in die außenverzahnte Planetenräder und in das innenverzahnte Hohlrad dazu führen, dass Unterschiede in der Umfangsgeschwindigkeit der Räder zu nachteiligen Kraft-und Spannungsverhältnissen innerhalb des Zahnriemens führen, die die Lebensdauer herabsetzen. Der Vorteil eines solchen Planeten-Riemengetriebes besteht dagegen in einer leichten Bauweise, einem schwingungsarmen und leisen Antrieb und einer weitgehenden Wartungsfreiheit.

Die DE 10 2015 007376 A1 offenbart eine elektronische Feststellbremse, bei der der die Bremsbacken betätigende Kolben mithilfe einer Spindel bewegt wird, die eine rotatorische Bewegung, d.h. eine Drehbewegung in eine translatorische Bewegung umformt. Der Antrieb der Spindel erfolgt über einen Elektromotor, an dem ein Untersetzungsgetriebe angeschlossen ist. Dieses Getriebe ist als eine Art Umlaufrädergetriebe mit Riemenantrieb ausgebildet. Dabei umgreift ein gezahnter Riemen das Sonnenrad und wird über in einem Steg gelagerten Planetenräder oder Riemenstützräder an die Innenverzahnung eines mit dem Steg verbundenen Hohlrad angedrückt. Der Riemen wird so mit dem Hohlrad in Eingriff gebracht, dass die Drehbewegung des Sonnenrades untersetzt übertragen wird. Dabei können Riemen und Stützräder auch so ausgebildet sein, dass der Riemen mit seiner Rückseite auf den Riemenstützrädem gleitet. Auch hier stellt der durch eine gewisse Pressung erzwungene Eingriff zwischen Stützrad und Hohlrad eine größere Belastung des Riemens dar, wodurch sich ein solcher Antrieb nur für die Übertragung geringerer Kräfte empfiehlt.

Eine ähnliche Ausführung findet sich in der DE 10 2006 026 444 A1, in der ein Planetengetriebe offenbart ist, bei dem der direkte Eingriff zwischen Sonnenrad und Planeten sowie auch der Eingriff zwischen Planeten und Hohlrad reibschlüssig mithilfe von Riemen erfolgt. Auch hier können aus den bereits genannten Gründen eher geringere Kräfte übertragen werden.

Die US 3,543,608 offenbart ein als Differential in einem Fahrzeugantrieb vorgesehenes Riemengetriebe mit umlaufenden Planeten, bei dem ein als Keilriemen ausgebildeter Antriebsriemen um 90° verdreht, d.h. getwistet wird und in verschiedenen Ebenen liegende Planeten- und Sonnenräder umschlingt. Die Planetenräder sind jeweils als Doppel ausgebildet und auf einer gemeinsamen Achse innerhalb eines rotierenden Steges gelagert. Die Achsen der Planetenräder einerseits und die Achsen des Sonnenrades und des Planetenträgers kreuzen sich rechtwinklig im Raum. Der Antrieb ist für kleinere, leichte Fahrzeuge, wie etwa Golf-Caddys gedacht. In gewisser Weise nachteilig ist der Twist, also das Verdrehen des Antriebsriemens, da hier die Seitenbereiche des Riemens besonders belastet werden.

Die US 5,445,572 offenbart ein Differenzialgetriebe für ein Kraftfahrzeug, bei dem das Antriebsdrehmoment über den Steg bzw. den Planetenträger eingeleitet und über zwei koaxiale Abtriebsräder auf die beiden Hinterachsen und damit auf die Hinterräder übertragen wird. Die Planetenräder im Träger und die Abtriebsräder sind dabei über einen Zahnriemen miteinander verbunden und bilden somit jeweils einen Riementrieb. Es ist dabei eine Ausführung mit einem doppelten oder mehrfachen und eine mit einem einfachen Riementrieb offenbart. Bei jedem dieser Riementriebe umschlingt der Riemen jedes der beiden Abtriebsräder und die Planetenräder, wobei Letztere gleichzeitig dazu dienen, den Riemen zu um 90° zu verdrehen und durch eine Ausnehmung im Steg oder Träger auf das jeweilige andere Abtriebsrad umzuleiten.

Durch ein solches Differenzialgetriebe können relativ hohe Drehmomente übertragen werden, wie sie in einem Kraftfahrzeugantrieb auftreten. Nachteilig ist jedoch auch hierbei der Twist, hier sogar eine zweifache Verdrehung des Zahnriemens um 90° und eine entsprechende Umlenkung, der insbesondere in den Seitenbereiche des Riemens sehr starke Kräfte erzeugt. Darüber hinaus erzeugen zusätzliche Andruckrollen und Bordscheiben, die für die Führung der Riemen auf den Planetenrädern erforderlich sind, hohe Reibungskräfte und damit Verschleiß.

Die WO 2011/156371 A1 offenbart eine Einrichtung zur Beschichtung von Halbleiterscheiben (Wafer), bei dem die Scheiben in einem Reaktor auf einem Träger positioniert werden und sowohl mit dem Träger als auch um ihre eigene Achse rotieren. Das Rotieren um die eigene Achse wird in einer Ausführung dadurch erreicht, dass eine Art riemengetriebenes Planetengetriebe vorgesehen ist, wobei die einzelnen Wafer auf den Planeten gelagert sind. Hier handelt es sich aber eher um eine einfache Nachbildung der Kinematik eines herkömmlichen Planetengetriebes durch andere Mittel, um lediglich dementsprechende kinematische Eigenschaften für die Wafer zu erreichen (Drehung um mehrere parallele Achsen).

Die DE 801801 C offenbart ein Umlaufgetriebe, welches geeignet ist, hohe Übersetzungs- bzw. Untersetzungsverhältnisse zu realisieren. Bei dem dort offenbarten Umlaufgetriebe wird zur Kraftübertragung zwischen zwei im Kraftweg folgenden Rädern ein endloses biegsames Zugorgan genutzt, vorzugsweise ein endloser Gummikeilriemen. Eine Verwendung als Differenzialgetriebe mit einer Drehrichtungsumkehr ist jedoch ohne weiteres nicht möglich.

Die bisher bekannten als Riemen- bzw. Zugmittelgetriebe ausgebildeten Umlaufrädergetriebe zur Leistungsübertragung zeigen nachteiligerweise in toto eine relativ komplizierte Bauweise. In vielen Ausführungen ist zudem eine Pressung des Riemens oder ein Verdrehen, d.h. ein Twist des Riemens erforderlich, wodurch ein entsprechender Reibungs- und Walkverlust in Kauf genommen werden muss und die Lebensdauer durch Überdehnungen erniedrigt werden kann. Zudem erlauben die im Stand der Technik bekannten Lösungen einen Einsatz eher nur bei geringeren Kraftübertragungen, beispielsweise für leichtere und langsame Fahrzeuge.

Für die Erfindung bestand daher die Aufgabe, ein als Riemen- bzw. Zugmittelgetriebe ausgebildetes Umlaufrädergetriebe bereitzustellen, welches die Vorteile einer einfachen Wartung und vernachlässigbaren Schmierung mit einer hohen Leistungsübertragung kombiniert, welches ein zu den üblichen Umlaufgetrieben geringes Gewicht, insbesondere geringe Massenträgheiten aufweist und welches sich durch eine stark reduzierte Geräuschemission auszeichnet und schwingungsarm läuft.

Gelöst wird diese Aufgabe durch die Merkmale des Hauptanspruchs. Weitere vorteilhafte Ausbildungen sind in den Unteransprüchen offenbart.

Bei dem erfindungsgemäßen Umlaufrädergetriebe ist einer der ein Sonnenrad mit den Planetenrädern verbindenden Riementriebe mit einem vor- und rückseitig umlaufenden Riemen so ausgebildet, dass bezogen auf den Planetenträger das zugehörige Sonnenrad entgegengesetzt zur Drehrichtung der Planetenrädern dreht wobei der Riemen die Planetenräder vorderseitig und das Sonnenrad rückseitig umläuft, während der andere Riementrieb einen Riemen aufweist, welcher die Planetenräder und das zugehörige Sonnenrad nur vorderseitig umläuft.

Es sind also zunächst mehrere Riementriebe vorgesehen, wobei nämlich jedes der Sonnenräder über mindestens einen der Riementriebe mit den Planetenrädern verbunden ist. Dadurch ist eine hohe Leistungsübertragung gesichert. Durch die räumlich parallele Ausrichtung der mit den Sonnenrädern verbundenen Wellen und der Achsen der Planetenräder ist dabei kein Verdrehen, d.h. kein Twist der Riemen der jeweiligen Riementriebe erforderlich.

Die Drehzahlkopplung zwischen den Riementrieben erfolgt dann auf einfache Weise über mindestens ein gemeinsam umschlungenes Planetenrad, besser über mehrere gemeinsam umschlungene Planetenräder. Dadurch ergibt sich u.a. die einfache und leichte Bauweise des Umlaufgetriebes, ein Riemen wiegt wenig und kann durch einfachste Längenanpassung - in Grenzen natürlich - beliebig viele Riemenräder oder -scheiben kraftübertragend umschlingen.

Wesentlich für die Realisierung des erfindungsgemäßen Umlaufgetriebes ist es nun, dass einer der ein Sonnenrad mit den Planetenrädern verbindenden Riementriebe mit einem vor- und rückseitig umlaufenden Riemen so ausgebildet ist, dass bezogen auf den Planetenträger das zugehörige Sonnenrad entgegengesetzt zur Drehrichtung der Planetenrädern drehbar ist.

Durch eine solche Drehrichtungsumkehr mit Hilfe eines vor- und rückseitig umlaufenden Riemens innerhalb eines der Riementriebe ergibt sich erst die Möglichkeit der Nutzung als Ausgleichsgetriebe oder Summengetriebe in einer überaus einfachen Konstruktion ohne komplizierte Umlenkungen, Durchführungen oder größere bewegte Massen. Der Riemen umläuft dabei vorzugsweise die Planetenräder vorderseitig und das Sonnenrad rückseitig, um die Bauweise weiter zu vereinfachen und möglichst kleine Abmessungen des Getriebes zu erreichen.

Eine vorteilhafte Weiterbildung besteht darin, dass das erfindungsgemäße Umlaufrädergetriebe als Differential- oder Ausgleichsgetriebe ausgeführt ist und die Riementriebe als Zahnriementriebe ausgebildet sind. Dabei ist der Planetenträger antreibbar mit einer Antriebswelle verbunden ist, also etwa mit einer vom Motor eines Fahrzeugs angetriebenen Welle, die das Antriebsdrehmoment auf den Planetenträger überträgt. Zwei konzentrisch zum Planetenträger angeordnete Sonnenräder sind dabei mit den Abtriebswellen drehfest verbundenen, also im Fall eines Fahrzeugantriebs mit den Antriebswellen der Antriebsräder. Die Sonnenräder und die Planetenräder sind außenverzahnt und jedes der Sonnenräder ist über mindestens einen Zahnriementrieb mit den Planetenrädern verbunden, wobei der Zahnriemen eines Zahnriementriebs mit einer vorderseitigen und einer rückseitigen Verzahnung ausgebildet ist und die Planetenräder vorderseitig und das zugehörige Sonnenrad rückseitig umläuft und der andere Zahnriementrieb einen Zahnriemen aufweist mit einer einseitigen, vorderseitigen Verzahnung, welcher die Planetenräder und das zugehörige Sonnenrad vorderseitig umläuft. Bezogen auf den Planetenträger ist dann das zum Riementrieb mit dem vorderseitig und einer rückseitig verzahnten Riemen gehörige Sonnenrad entgegengesetzt zur Drehrichtung der Planetenräder und entgegengesetzt zum anderen Sonnenrad drehbar. Durch eine derartige Ausbildung wird beispielsweise bei Antrieb eines Sonnenrades eine Drehrichtungsumkehr im anderen Sonnenrad hervorgerufen, also das typische Verhalten eines Differentialgetriebes von Kraftfahrzeugen. Je nach Bauart des Umlaufrädergetriebes kann der Planetenträger dabei übrigens auch als Planetenkäfig oder -korb ausgebildet sein. Während konventionelle Differenzialgetriebe in aller Regel miteinander kämmende metallische Zahnräder aufweisen, beispielsweise Kegelräder oder Stirnräder, und damit entsprechend hohe Gewichte in ein Fahrzeug einbringen, erlaubt die erfindungsgemäße Ausbildung eines Umlaufrädergetriebes mit verzahnten Riemenantrieben eine Übertragung von großen Kräften bzw. hohen Drehmomenten bei geringem Gewicht. Dadurch ist das Umlaufrädergetriebe geeignet, als Differential in einem Kraftfahrzeugantrieb mit großen Drehmomenten eingesetzt zu werden.

Eine weitere vorteilhafte Ausbildung besteht darin, dass bei einem erfindungsgemäßen Umlaufrädergetriebe die Drehzahlkopplung der Riementriebe über zwei gemeinsam von ihren beiden Riemen umschlungene Planetenräder erfolgt, bei Zahnriementrieben entsprechend über zwei außenverzahnte gemeinsam von ihren beiden Zahnriemen umschlungene Planetenräder erfolgt. Natürlich können auch, je nach der vorgesehenen Anzahl der Planetenräder im Planetenträger, weitere Planetenräder von den jeweiligen Riemen der Riementriebe umschlungen und somit drehzahlgekoppelt werden. Auf diese Weise kann die Übertragung von Momenten auf mehrere Planetenräder aufgeteilt werden. Bei Zahnriemen verringern sich dadurch die Zahnfußspannungen, so dass größere Leistungen durchgesetzt werden können.

Eine weitere vorteilhafte Ausbildung besteht darin, dass die beiden Sonnenräder vor Kopf voreinander liegend angeordnet sind und die gemeinsam umschlungenen Planetenräder eine solche Breite aufweisen, dass die Riemen der beiden Riementriebe nebeneinander umlaufend die Planetenräder umschlingen. Die Planetenräder weisen dann in etwa eine Breite auf, die, abgesehen etwa von erforderlichen Mindestabständen und der Kompensation von Toleranzen, im Wesentlichen der Summe der Breite der beiden Sonnenräder entspricht.

Das gilt natürlich auch für Zahnriementriebe, bei denen dann die Zahnriemen der beiden Riementriebe nebeneinander umlaufend in die Verzahnung der gemeinsam umschlungenen Planetenräder eingreifen. Der Einsatz einer solchen Anordnung, bei der die Riementriebe die Planetenräder zur Drehzahlkopplung nebeneinander umlaufen, vereinfacht die Bauweise und verkleinert den Bauraum für das Differential. Natürlich können bei anderen Arten von Riementrieben, beispielsweise bei Keilrippenriemen oder Vielkeilriemen, die Planetenräder und die übrigen umschlungenen Räder mit entsprechenden komplementären Profilen zur Führung der Riemen versehen sein.

Eine weitere vorteilhafte Ausbildung besteht darin, dass der Planetenträger als topfförmiges oder trommelförmiges und mit einem Deckel versehenes Gehäuse ausgebildet ist, nämlich als sogenannter Differentialkorb, und dass die Planetenräder bzw. die Achsen der Planetenräder jeweils einerseits im Trommelboden und andererseits im Trommeldeckel drehbar gelagert sind, wobei eine mit einem Sonnenrad verbundene Welle durch den Trommelboden und die mit dem anderen Sonnenrad verbundene Welle durch den Trommeldeckel aus dem Gehäuse geführt ist. Auch dies führt dazu, dass der Bauraum für das Umlaufgetriebe minimiert wird.

Eine weitere vorteilhafte Ausbildung im Sinne einer vereinfachten Bauweise und Montage besteht darin, dass ein Sonnenrad bzw. die damit verbundene Welle einseitig im Trommelboden und das andere Sonnenrad bzw. die damit verbundene Welle einseitig im Trommeldeckel drehbar gelagert und abgestützt sind. Natürlich sind hierbei auch aus anderen Getriebekonstruktionen bekannte Lagerungen möglich, beispielsweise eine solche, bei der eine gemeinsame Achse für die beiden Sonnenräder ausgebildet ist und die mit den Sonnenrädern verbundenen Wellen als Hohlwellen ausgebildet und auf dieser Achse gelagert und abgestützt werden. Geeignet sind hierzu beispielsweise Schrägrollenlager, die auch Axialkräfte aufnehmen.

Eine weitere vorteilhafte Ausbildung besteht darin, dass im Planetenträger mindestens vier Planetenräder gelagert sind. Wie oben bereits dargestellt können bei der Verwendung einer größeren Anzahl von Planeten höhere Leistungen übertragen werden. Bei den erfindungsgemäßen Umlaufrädergetriebe hat sich als Kompromiss zwischen Baugröße und erforderlicher Leistungsübertragung die Verwendung von vier Planetenrädern, von denen zwei zur Drehzahlkopplung von jeweils beiden Zahnriementrieben umschlungen werden, als besonders geeignet erwiesen.

Eine weitere vorteilhafte Ausbildung eines Umlaufrädergetriebes mit vier Planetenrädern besteht darin, dass der mit einem vor- und rückseitig umlaufenden Riemen ausgebildete Riementrieb in alle vier Planetenräder umlaufend eingreift und der mit einem lediglich vorderseitig umlaufende Riemen in zwei Planetenräder umlaufend eingreift, so dass die Riementriebe wieder über zwei gemeinsam von ihren Riemen umschlungenen Planetenräder drehzahlgekoppelt miteinander verbunden sind. Auch damit wird ein guter Kompromiss zwischen Baugröße und Drehmomente-bzw. Leistungsübertragung unterstützt.

Für die Übertragung sehr hoher Leistungen bietet sich eine weitere vorteilhafte Ausbildung an, die darin besteht, dass erfindungsgemäße Umlaufrädergetriebe mit jeweils mehreren gleichsinnig leistungsübertragenden, parallelen Riementrieben für jedes Mitten- oder Sonnenrad auszurüsten.

Die solcherart leicht und klein bauenden erfindungsgemäßen Umlaufrädergetriebe sind gut geeignet als Differential oder Ausgleichsgetriebe für eine Antriebsachse eines Kraftfahrzeugs, vorzugsweise für die Antriebsachse eines Elektrofahrzeugs.

In Umkehrung der Kinetik kann ein solches Umlaufrädergetriebe vorteilhaft auch als Summengetriebe eingesetzt werden, wobei die Mitten- oder Sonnenräder antreibbar sind und der Planetenträger mit der Abtriebswelle verbunden ist. So können beispielsweise mehrere Elektromotoren in einem Fahrzeug auf eine Antriebswelle Leistungen übertragen.

Anhand eines Ausführungsbeispiels soll die Erfindung näher erläutert werden. Es zeigen
- Fig. 1: ein erfindungsgemäßes Umlaufrädergetriebe in Form einer perspektivischen Explosionszeichnung,
- Fig. 2: die Umlauf- und Verzahnungsverhältnisse des erfindungsgemäßen Umlaufrädergetriebe in einer perspektivischen Skizze des Zusammenbaus, ohne Darstellung des Planetenträgers bzw. Getriebekorbs,
- Fig. 3: eine Skizze der Ansicht des erfindungsgemäßen Umlaufgetriebes im Zusammenbau, ebenfalls ohne Darstellung des Planetenträgers bzw. Getriebekorbs.

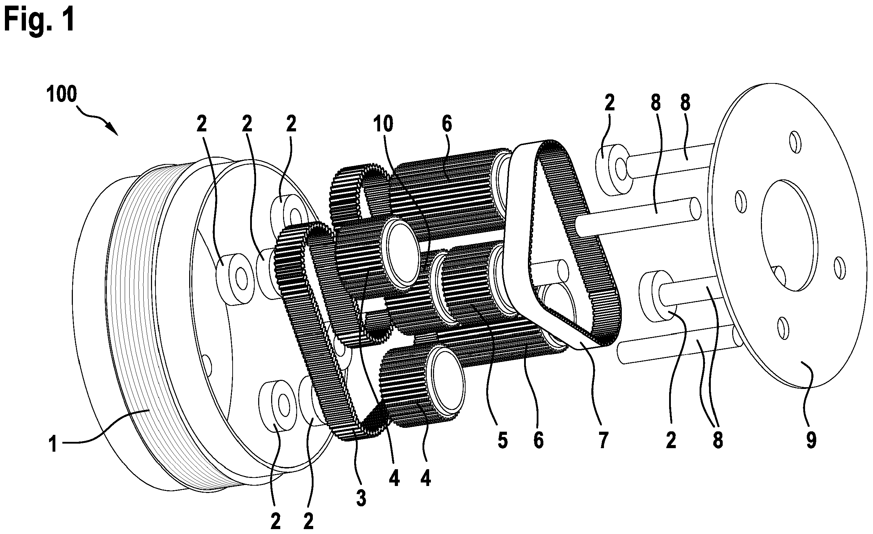

Fig. 1 zeigt ein erfindungsgemäßes Umlaufrädergetriebe 100 mit drei Wellen, ausgebildet als Zahnriemengetriebe. Zum besseren Verständnis ist die Figur 1 in Form einer perspektivischen Explosionszeichnung ausgeführt.

Das Umlaufrädergetriebe 100 ist als Differentialgetriebe konstruiert, welches ein Antriebsdrehmoments auf zwei hintere Antriebsräder eines Fahrzeugs verteilt. Das Differentialgetriebe dient insbesondere zum Ausgleich unterschiedlicher Drehzahlen zwischen kurveninnerem und kurvenäußerem Rad bei Kurvendurchfahrten. Der Planetenträger oder Getriebekorb 1 ist antreibbar und zur Übertragung eines Antriebsdrehmomentes mit einer hier nicht näher dargestellten Antriebswelle verbunden, etwa durch weitere Getriebe.

Der topfförmig ausgebildete Planetenträger 1 dient im Zusammenwirken mit dem Gehäusedeckel 9 zur Aufnahme und Lagerung der Planetenräderpaare 4 und 6. Die Planetenräder 6 sind dabei mehr als doppelt so breit ausgebildet, wie die Planetenräder 4. Die jeweils zwei Planetenräder 4 und die zwei Planetenräder 6 sind mithilfe ihrer Achsen 8 und entsprechenden Lagern 2 einerseits im topfförmigen Träger 1 und andererseits im Gehäusedeckel 9 gelagert. Die beiden Sonnenräder 5 und 10 sind konzentrisch zum Planetenträger vor Kopf voreinander liegend angeordnet. Die gemeinsam umschlungenen Planetenräder 6 weisen eine solche Breite auf, dass die Riemen 3 und 7 der beiden Riementriebe nebeneinander umlaufend die Planetenräder 6 umschlingen.

Innerhalb des aus topfförmigen Planeten Träger 1 und Gehäusedeckel 9 gebildeten Getriebekorbs bzw. des Getriebes sind zwei Sonnenräder 5 und 10 konzentrisch zum Planetenträger 1 angeordnet und mit jeweils einer der Abtriebswellen drehfest verbundenen. Diese Abtriebswellen sind hier nicht näher dargestellt und werden bei dem hier gezeigten Ausgleichsgetriebe für einen Hinterradantrieb eines Fahrzeugs landläufig als Antriebswellen der Hinterräder bezeichnet. Das Sonnenrad 10 ist hier über die entsprechende Welle mit dem linken Hinterrad verbunden und das Sonnenrad 5 über eine Welle mit dem rechten Hinterrad.

Die mit den Sonnenrädern verbundenen Wellen und die Achsen 8 der Planetenräder 4, 6 sind räumlich parallel ausgerichtet. Es sind in dieser Ausführung des erfindungsgemäßen Umlaufgetriebes zwei Riementriebe mit Zahnriemen 3 und 7 vorgesehen, nämlich ein Riementrieb für jedes der Sonnenräder 5 und 10, so dass jedes der Sonnenräder über einen der Riementriebe mit den bzw, einigen Planetenrädern verbunden ist. Sonnenräder 5, 10 und Planetenräder 4 und 6 sind außenverzahnt.

Darüber hinaus sind die beiden Riementriebe drehzahlgekoppelt. Die beiden Riementriebe sind nämlich über die beiden gemeinsam von den Riemen 3 und 7 umschlungenen Planetenräder 6 miteinander verbunden, wodurch eine identische Riemenumlaufgeschwindigkeit und somit eine Drehzahlkopplung erzwungen wird.

Der Riementrieb 3, der das Sonnenrad 10 mit den Planetenrädern verbindet, ist mit einem vor- und rückseitig umlaufenden Zahnriemen, also einem mit einer beidseitigen Verzahnung versehenen Zahnriemen 3 so ausgebildet, dass bezogen auf den Planetenträger 1 das zugehörige Sonnenrad 10 entgegengesetzt zur Drehrichtung der Planetenrädern drehbar ist, wobei der Riemen 3 die Planetenräder 4 und 6 vorderseitig und das Sonnenrad 10 rückseitig umläuft.

Der andere Zahnriementrieb, der das Sonnenrad 5 mit den Planetenrädern verbindet, weist einen Zahnriemen 7 auf, der lediglich mit einer einseitigen, vorderseitigen Verzahnung versehen ist und der die Planetenräder und das zugehörige Sonnenrad 5 vorderseitig umläuft. Bei gezwungenermaßen gleichsinnig drehenden Planetenrädern würden sich dann auch die beiden Sonnenräder 5 und 10 entgegengesetzt drehen, da das Sonnenrad 5 vorderseitig und das Sonnenrad 10 rückseitig von den jeweiligen Riemen umschlungen wird.

Bei angetriebenen Differentialkorb bzw. Planetenträger 1 und Geradeausfahrt gibt es keine Relativbewegung im Riementrieb (Riemengeschwindigkeit = 0). Differentialkorb 1 und die Sonnenräder 5 und 10 haben dieselbe Drehzahl. Bei Drehzahlunterschieden zwischen linkem und rechtem Hinterrad werden diese durch eine Relativbewegung im Riementrieb ausgeglichen. Dies ist möglich, da die Planetenräder 4 und 6 im Differenzialkorb 1 und 9 über die Lager 2 auf Achsen 8 gelagert sind. Der beschriebene Effekt der Drehrichtungsumkehr bewirkt, dass das kurveninnere Rad langsamer und das kurvenäußere Rad entsprechend schneller in Rotation versetzt wird. Um die Anzahl der eingreifenden Zähne und somit die Leistungsfähigkeit zu erhöhen, kann das Differentialgetriebe durch weitere Planetenräder, die mit der Riemenverzahnung im Eingriff stehen, erweitert werden.

Die Drehzahlkopplung der Riementriebe bzw. Riemen 3 und 7 erfolgt über zwei gemeinsam von den beiden Riemen umschlungene Planetenräder 6. Der Riemen 7 umschlingt lediglich diese beiden Planetenräder 6, während der Riemen 3 alle vier Planetenräder umschlingt, nämlich das Planetenräderpaar 4 und das Planetenräderpaar 6.

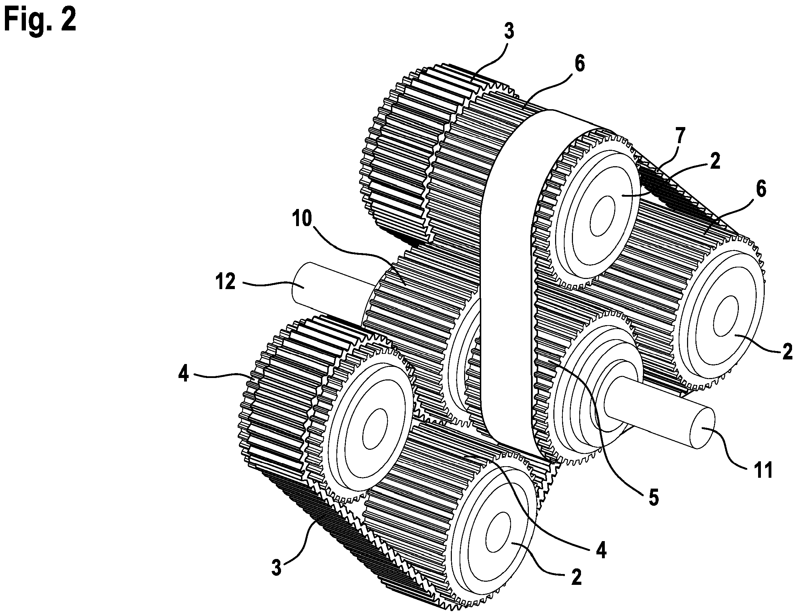

Fig.2 zeigt zur Verdeutlichung in einer perspektivischen Skizze des Zusammenbaus noch einmal die Umlauf- und Verzahnungsverhältnisse des erfindungsgemäßen und als Differential oder Ausgleichsgetriebe mit drei Wellen ausgebildeten Umlaufgetriebes, der Übersichtlichkeit halber ohne Planetenträger bzw. Getriebekorb dargestellt.

Man erkennt hier die zwei konzentrisch angeordneten Sonnenräder 5 und 10, die genauso wie die Planetenräderpaare 4 und 6 außenverzahnt sind. Jedes der Sonnenräder 5, 10 ist in einem Zahnriementrieb eingebunden und über Zahnriemen 3, 7 mit den Planetenrädern 4, 6 verbunden. Der Zahnriemen 3 des zum Sonnenrad 10 gehörigen Zahnriementriebs ist mit einer vorderseitigen und einer rückseitigen Verzahnung ausgebildet und umläuft die Planetenräder 4, 6 vorderseitig und das Sonnenrad 10 rückseitig.

Der andere Zahnriemen 7 des zum Sonnenrad 5 gehörigen Zahnriementriebs weist lediglich eine einseitige, nämlich vorderseitige Verzahnung auf, welcher die Planetenräder 6 und das Sonnenrad 5 vorderseitig umläuft. Erkennbar sind hier nun auch der Wellenansatz der Welle 11 am Sonnenrad 5 und der Wellenansatz der Welle 12 am Sonnenrad 10, die prinzipiell verdeutlichen, wie die Sonnenräder mit dem jeweils zugehörigen Abtriebswellen bzw. Antriebswellen der Hinterräder verbunden sind.

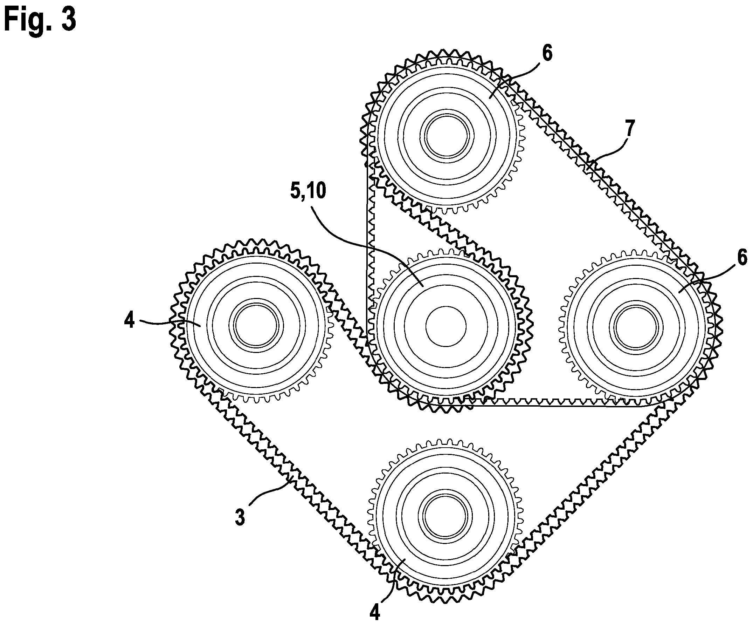

Letztlich zeigt Fig. 3 noch einmal eine Ansichtsskizze des Umlaufgetriebes im Zusammenbau, ebenfalls ohne Darstellung des Planetenträgers bzw. Getriebekorbs. Man erkennt hier noch einmal deutlich, dass der Riemen 3 die Zahnradplanetenradpaare 4 und 6 vorderseitig und das zugehörige Sonnenrad 10 rückseitig umläuft, während der Riemen 7 das Sonnenrad 5 und lediglich die beiden Planetenräder des Planetenpaares 6 vorderseitig umläuft.

Wie bereits oben dargestellt, zeichnet sich das erfindungsgemäße Umlaufräder-Riemengetriebe /Differentialgetriebe durch einen wartungsarmen und trockenen Lauf, durch einen kostengünstig und leichten Aufbau, durch geringere Massenträgheiten und durch einen geräuscharmen Lauf aus.

Natürlich muss der Planetenträger nicht unbedingt nur als angetriebener Getriebekorb ausgebildet werden, sondern kann konzentrisch zu und innerhalb eines weiteren innenverzahnten Mittenrades angeordnet werden, nämlich eines Hohlrads. Das innenverzahnte Hohlrad kann dann mit der Außenverzahnung einiger bzw. aller Planetenräder direkt kämmen oder aber über den beidseitig verzahnten Riemen im Eingriff sein. Durch eine solche Ausbildung lassen sich unterschiedlichste Arten von Planetengetrieben mithilfe eines erfindungsgemäßen Umlaufräder-Riemengetriebes realisieren.

### Bezugszeichenliste

- 1: Planetenträger oder Getriebekorb
- 2: Lager der Planetenachse
- 3: Doppelzahnriemen, vorderseitig und rückseitig verzahnt
- 4: Planetenrad, Planetenradpaar
- 5: Sonnenrad
- 6: Planetenrad, Planetenradpaar
- 7: Einfach verzahnter Zahnriemen
- 8: Planetenachsen
- 9: Gehäusedeckel, Deckel des Getriebegehäuses
- 10: Sonnenrad
- 11: Wellenansatz der Welle des Sonnenrades 5
- 12: Wellenansatz der Welle des Sonnenrades 10
- 100: Umlaufrädergetriebe/Differential mit drei Wellen

## Patentansprüche

1. Umlaufrädergetriebe (100) mit mindestens drei Wellen, ausgebildet als Riemen- bzw. Zugmittelgetriebe, mit einem mit einer ersten Welle drehfest oder über ein Getriebe verbundenen Planetenträger (1) zur Aufnahme und Lagerung von Planetenrädern (4, 6) und mit zwei konzentrisch zum Planetenträger angeordneten und mit jeweils einer der weiteren Wellen (11, 12) drehfest verbundenen Sonnenrädern (5, 10),
- wobei die mit den Sonnenrädern (5, 10) verbundenen Wellen und die Achsen (8) der Planetenräder (4, 6) räumlich parallel ausgerichtet sind,
- wobei mindestens zwei Riementriebe vorgesehen sind und jedes der Sonnenräder (5, 10) über einen der Riementriebe mit den Planetenrädern (4, 6) verbunden ist,
- wobei die Riementriebe über mindestens ein gemeinsames von ihren Riemen (3, 7) umschlungenes Planetenrad (6) drehzahlgekoppelt miteinander verbunden sind,
**dadurch gekennzeichnet, dass**
einer der ein Sonnenrad (10) mit den Planetenrädern verbindenden Riementriebe mit einem vor- und rückseitig umlaufenden Riemen (3) so ausgebildet ist, dass bezogen auf den Planetenträger (1) das zugehörige Sonnenrad (10) entgegengesetzt zur Drehrichtung der Planetenrädern (4, 6) dreht wobei der Riemen (3) die Planetenräder (4, 6) vorderseitig und das Sonnenrad (10) rückseitig umläuft, während der andere Riementrieb einen Riemen (7) aufweist, welcher die Planetenräder (6) und das zugehörige Sonnenrad (5) vorderseitig umläuft.

2. Umlaufrädergetriebe nach Anspruch 1, ausgebildet als Differential oder Ausgleichsgetriebe mit drei Wellen, wobei der Planetenträger (1) antreibbar mit einer Antriebswelle verbundenen ist und zwei konzentrisch zum Planetenträger angeordnete Sonnenräder (5,10) mit den Abtriebswellen (11, 12) drehfest verbundenen sind, **dadurch gekennzeichnet, dass** Sonnenräder (5, 10) und Planetenräder (4, 6) außenverzahnt sind und jedes der Sonnenräder (5, 10) über mindestens einen Zahnriementrieb mit den Planetenrädern (4, 6) verbunden ist, wobei der Zahnriemen (3) eines Zahnriementriebs mit einer vorderseitigen und einer rückseitigen Verzahnung ausgebildet ist und die Planetenräder (4, 6) vorderseitig und das zugehörige Sonnenrad (10) rückseitig umläuft und der andere Zahnriementrieb einen Zahnriemen (7) aufweist mit einer einseitigen, vorderseitigen Verzahnung, welcher die Planetenräder (6) und das zugehörige Sonnenrad (5) vorderseitig umläuft.

3. Umlaufrädergetriebe nach Anspruch 1 oder 2, bei dem die Drehzahlkopplung der Riementriebe über zwei gemeinsam von ihren beiden Riemen umschlungene Planetenräder (6) erfolgt.

4. Umlaufrädergetriebe nach einem der Ansprüche 1 bis 3, bei dem die beiden Sonnenräder (5, 10) vor Kopf voreinander liegend angeordnet sind und die gemeinsam umschlungenen Planetenräder (6) eine solche Breite aufweisen, dass die Riemen (3, 7) der beiden Riementriebe nebeneinander umlaufend die Planetenräder (6) umschlingen.

5. Umlaufrädergetriebe nach einem der Ansprüche 1 bis 4, bei dem der Planetenträger (1) als topfförmiges oder trommelförmiges und mit einem Deckel versehenes Gehäuse ausgebildet ist und die Planetenräder bzw. die Achsen (8) der Planetenräder jeweils einerseits im Trommelboden und andererseits im Trommeldeckel (9) drehbar gelagert sind, wobei eine mit einem Sonnenrad (10) verbundene Welle durch den Trommelboden und die mit dem anderen Sonnenrad (5) verbundene Welle durch den Trommeldeckel (9) aus dem Gehäuse geführt ist.

6. Umlaufrädergetriebe nach Anspruch 5, bei dem ein Sonnenrad (10) bzw. die damit verbundene Welle (12) einseitig im Trommelboden und das andere Sonnenrad (5) bzw. die damit verbundene Welle (11) einseitig im Trommeldeckel (9) drehbar gelagert sind.

7. Umlaufrädergetriebe nach einem der Ansprüche 1 bis 6, bei dem im Planetenträger (1) mindestens vier Planetenräder (4, 6) gelagert sind.

8. Umlaufrädergetriebe nach einem der Ansprüche 1 bis 7 mit vier Planetenrädern, bei dem der mit einem vor- und rückseitig umlaufenden Riemen (3) ausgebildete Riementrieb in alle vier Planetenräder (4, 6) umlaufend eingreift und der mit einem lediglich vorderseitig umlaufende Riemen (7) in zwei Planetenräder (6) umlaufend eingreift, so dass die Riementriebe über zwei gemeinsam von ihren Riemen (3, 7) umschlungenen Planetenräder (6) drehzahlgekoppelt miteinander verbunden sind.

9. Umlaufrädergetriebe nach einem der Ansprüche 1 bis 8 mit jeweils mehreren gleichsinnig leistungsübertragenden, parallelen Riementrieben für jedes Sonnenrad.

10. Umlaufrädergetriebe nach einem der Ansprüche 1 bis 9, ausgebildet als Differential oder Ausgleichsgetriebe (100) für eine Antriebsachse eines Kraftfahrzeugs, vorzugsweise für die Antriebsachse eines Elektrofahrzeugs.

11. Umlaufrädergetriebe nach einem der Ansprüche 1 bis 9, ausgebildet als Summengetriebe, wobei die Sonnenräder antreibbar sind und der Planetenträger mit der Abtriebswelle verbunden ist.

## Claims

1. Epicyclic wheel mechanism (100) with at least three shafts, configured as a belt or flexible drive mechanism, with a planetary carrier (1) for receiving and mounting planetary wheels (4, 6), which planetary carrier (1) is connected via a mechanism or fixedly to a first shaft so as to rotate with it, and with two sun wheels (5, 10) which are arranged concentrically with respect to the planetary carrier and are connected fixedly to in each case one of the further shafts (11, 12) so as to rotate with it,
- the shafts which are connected to the sun wheels (5, 10) and the axles (8) of the planetary wheels (4, 6) being oriented spatially in parallel,
- at least two belt drives being provided, and each of the sun wheels (5, 10) being connected via one of the belt drives to the planetary wheels (4, 6),
- the belt drives being connected to one another in a manner which is coupled in terms of rotational speed via at least one common planetary wheel (6) which is wrapped around by their belts (3, 7),
**characterized in that** one of the belt drives which connects a sun wheel (10) to the planetary wheels is configured with a circulating belt (3) on the front and rear side in such a way that, in relation to the planetary carrier (1), the associated sun wheel (10) rotates in an opposite direction to the rotational direction of the planetary wheels (4, 6), the belt (3) running around the planetary wheels (4, 6) on the front side and the sun wheel (10) on the rear side, whereas the other belt drive has a belt (7) which runs around the planetary wheels (6) and the associated sun wheel (5) on the front side.

2. Epicyclic wheel mechanism according to Claim 1, configured as a differential or compensation mechanism with three shafts, the planetary carrier (1) being connected to a drive shaft such that it can be driven, and two sun wheels (5, 10) which are arranged concentrically with respect to the planetary carrier being connected fixedly to the output shaft (11, 12) so as to rotate with them, **characterized in that** the sun wheels (5, 10) and the planetary wheels (4, 6) are externally toothed, and each of the sun wheels (5, 10) is connected to the planetary wheels (4, 6) via at least one toothed belt drive, the toothed belt (3) of a toothed belt drive being configured with a front-side and rearside toothing system, and running around the planetary wheels (4, 6) on the front side and the associated sun wheel (10) on the rear side, and the other toothed belt drive having a toothed belt (7) with a single-side, front-side toothing system, which toothed belt (7) runs around the planetary wheels (6) and the associated sun wheel (5) on the front side.

3. Epicyclic wheel mechanism according to Claim 1 or 2, in the case of which the rotational speed coupling of the belt drives takes place via two planetary wheels (6) which are wrapped around jointly by their two belts.

4. Epicyclic wheel mechanism according to one of Claims 1 to 3, in the case of which the two sun wheels (5, 10) are arranged so as to lie head-on in front of one another, and the planetary wheels (6) which are wrapped around jointly have such a width that the belts (3, 7) of the two belt drives wrap around the planetary wheels (6) so as to run around them next to one another.

5. Epicyclic wheel mechanism according to one of Claims 1 to 4, in the case of which the planetary carrier (1) is configured as a pot-shaped or drum-shaped housing which is provided with a cover, and the planetary wheels or the axles (8) of the planetary wheels are mounted rotatably in each case on one side in the drum bottom and on the other side in the drum cover (9), a shaft which is connected to a sun wheel (10) being guided out of the housing through the drum bottom, and the shaft which is connected to the other sun wheel (5) being guided out of the housing through the drum cover (9).

6. Epicyclic wheel mechanism according to Claim 5, in the case of which a sun wheel (10) or the shaft (12) which is connected to the latter is mounted rotatably on one side in the drum bottom, and the other sun wheel (5) or the shaft (11) which is connected to the latter is mounted rotatably on one side in the drum cover (9).

7. Epicyclic wheel mechanism according to one of Claims 1 to 6, in the case of which at least four planetary wheels (4, 6) are mounted in the planetary carrier (1).

8. Epicyclic wheel mechanism according to one of Claims 1 to 7 with four planetary wheels, in the case of which epicyclic wheel mechanism the belt drive which is configured with a belt (3) which runs around on the front and rear side engages circumferentially into all four planetary wheels (4, 6), and the belt (7) which runs around merely on the front side engages circumferentially into two planetary wheels (6), with the result that the belt drives are connected to one another in a manner which is coupled in terms of rotational speed via two planetary wheels (6) which are wrapped around jointly by their belts (3, 7).

9. Epicyclic wheel mechanism according to one of Claims 1 to 8 with in each case a plurality of parallel belt drives for each sun wheel which transmit power in the same direction.

10. Epicyclic wheel mechanism according to one of Claims 1 to 9, configured as a differential or compensation mechanism (100) for a drive axle of a motor vehicle, preferably for the drive axle of an electric vehicle.

11. Epicyclic wheel mechanism according to one of Claims 1 to 9, configured as a summing mechanism, it being possible for the sun wheels to be driven, and the planetary carrier being connected to the output shaft.

## Revendications

1. Train épicycloïdal (100), comprenant au moins trois arbres, réalisé sous la forme d'une transmission à courroie ou à moyen de traction, comprenant un porte-satellites (1) relié de manière verrouillée en rotation à un premier arbre ou par un engrenage, destiné à recevoir et à loger des roues planétaires (4, 6), et comprenant deux roues solaires (5, 10) disposées de manière concentrique par rapport au porte-satellites et reliées de manière verrouillée en rotation à respectivement l'un des arbres supplémentaires (11, 12),
- les arbres reliés aux roues solaires (5, 10) et les arbres (8) des roues planétaires (4, 6) étant alignés en parallèle dans l'espace,
- dans lequel au moins deux entraînements par courroie sont prévus, et chacune des roues solaires (5, 10) est reliée aux roues planétaires (4, 6) par l'un des entraînements par courroie,
- les entraînements par courroie étant reliés l'un à l'autre par couplage de vitesse de rotation par l'intermédiaire d'au moins une roue planétaire (6) commune sur laquelle sont enroulées leurs courroies (3, 7),
**caractérisé en ce que** l'un des entraînements par courroie reliant une roue solaire (10) aux roues planétaires, doté d'une courroie (3) tournante en face avant et en face arrière, est réalisé de telle sorte que par rapport au porte-satellites (1), la roue solaire associée (10) tourne à l'opposé de la direction de rotation des roues planétaires (4, 6), la courroie (3) tournant autour des roues planétaires (4, 6) en face avant et autour de la roue solaire (10) en face arrière, alors que l'autre entraînement par courroie présente une courroie (7) qui tourne autour des roues planétaires (6) et autour de la roue solaire associée (5) en face avant.

2. Train épicycloïdal selon la revendication 1, réalisé sous forme de différentiel ou engrenage différentiel à trois arbres, dans lequel le porte-satellites (1) est relié à un arbre d'entraînement de manière à pouvoir être entraîné, et deux roues solaires (5, 10), disposées de manière concentrique par rapport au porte-satellites, sont reliées aux arbres de sortie (11, 12) de manière verrouillée en rotation, **caractérisé en ce que** les roues solaires (5, 10) et les roues planétaires (4, 6) présentent une denture extérieure et chacune des roues solaires (5, 10) est reliée aux roues planétaires (4, 6) par au moins un entraînement par courroie, dans lequel la courroie crantée (3) d'un entraînement par courroie crantée est réalisée avec une denture en face avant et une denture en face arrière et tourne autour des roues planétaires (4, 6) en face avant et autour de la roue solaire associée (10) en face arrière, et l'autre entraînement par courroie crantée présente une courroie crantée (7) dotée d'une denture unilatérale en face avant qui tourne autour des roues planétaires (6) et autour de la roue solaire associée (5) en face avant.

3. Train épicycloïdal selon la revendication 1 ou 2, dans lequel le couplage de vitesse de rotation des entraînements par courroie est effectué par deux roues planétaires (6) sur lesquelles leurs deux courroies sont enroulées ensemble.

4. Train épicycloïdal selon l'une quelconque des revendications 1 à 3, dans lequel les deux roues solaires (5, 10) sont disposées en tête en étant placées l'une devant l'autre, et les roues planétaires (6) à enroulement commun présentent une largeur telle que les courroies (3, 7) des deux entraînements par courroie sont enroulées sur les roues planétaires (6) en tournant l'une à côté de l'autre.

5. Train épicycloïdal selon l'une quelconque des revendications 1 à 4, dans lequel le porte-satellites (1) est réalisé sous la forme d'un boîtier en forme de pot ou de tambour et muni d'un couvercle, et les roues planétaires ou les arbres (8) des roues planétaires sont respectivement montés rotatifs d'une part dans le fond de tambour et d'autre part dans le couvercle de tambour (9), dans lequel un arbre relié à une roue solaire (10) est guidé à travers le fond de tambour, et l'autre arbre relié à l'autre roue solaire (5) est guidé hors du boîtier à traves le couvercle de tambour (9) .

6. Train épicycloïdal selon la revendication 5, dans lequel une roue solaire (10) ou l'arbre (12) relié à celle-ci est monté(e) rotatif/rotative unilatéralement dans le fond de tambour, et l'autre roue solaire (5) ou l'arbre (11) relié à celle-ci est monté(e) rotatif/rotative unilatéralement dans le couvercle de tambour (9).

7. Train épicycloïdal selon l'une quelconque des revendications 1 à 6, dans lequel au moins quatre roues planétaires (4, 6) sont montées dans le porte-satellites (1).

8. Train épicycloïdal selon l'une quelconque des revendications 1 à 7, comprenant quatre roues planétaires, dans lequel l'entraînement par courroie, réalisé avec une courroie (3) tournante en face avant et en face arrière, vient en prise en tournant avec l'ensemble des quatre roues planétaires (4, 6), et l'entraînement ayant seulement une courroie (7) tournante en face avant, vient en prise en tournant avec deux roues planétaires (6) de sorte que les entraînements par courroie sont reliés l'un à l'autre par couplage de vitesse de rotation par l'intermédiaire de deux roues planétaires (6) sur lesquelles leurs courroies (3, 7) sont enroulées ensemble.

9. Train épicycloïdal selon l'une quelconque des revendications 1 à 8, comprenant respectivement plusieurs entraînements par courroie parallèles, à transmission de puissance dans le même sens, pour chaque roue solaire.

10. Train épicycloïdal selon l'une quelconque des revendications 1 à 9, réalisé sous la forme d'un différentiel ou engrenage différentiel (100) pour un arbre primaire d'un véhicule automobile, de préférence pour l'arbre primaire d'un véhicule électrique.

11. Train épicycloïdal selon l'une quelconque des revendications 1 à 9, réalisé sous la forme d'un engrenage additif, dans lequel les roues solaires peuvent être entraînées et le porte-satellites est relié à l'arbre de sortie.
